Europäisches Patentamt

European Patent Office

Office européen des brevets

(11) Publication number: **0 005 617**
**B1**

(12) **EUROPEAN PATENT SPECIFICATION**

(45) Date of publication of patent specification: **15.08.84**

(51) Int. Cl.³: **C 08 L 9/06, C 08 K 5/20**

(21) Application number: **79300820.2**

(22) Date of filing: **14.05.79**

(54) Vulcanizable rubber compounds.

(30) Priority: **12.05.78 JP 55526/78**
**14.02.79 JP 14958/79**

(43) Date of publication of application:
**28.11.79 Bulletin 79/24**

(45) Publication of the grant of the patent:
**15.08.84 Bulletin 84/33**

(84) Designated Contracting States:
**DE GB**

(56) References cited:
**DE - A - 2 357 859**
**US - A - 3 113 036**
**US - A - 3 431 246**
**US - A - 4 094 831**

(73) Proprietor: **JAPAN SYNTHETIC RUBBER CO., LTD.**
**11-24, Tsukiji-2-chome Chuo-ku**
**Tokyo (JP)**

(72) Inventor: **Ikeda, Hiroharu**
**13-6, Narusedai-4-chome**
**Machida-shi (JP)**
Inventor: **Shimozato, Yasuyuki**
**29, Aobadai-2-chome Midori-ku**
**Yokohama (JP)**

(74) Representative: **Ruffles, Graham Keith et al,**
**MARKS & CLERK 57-60 Lincoln's Inn Fields**
**London WC2A 3LS (GB)**

Courier Press, Leamington Spa, England.

# 0 005 617

**Description**

This invention relates to vulcanizable rubber compounds, and to the vulcanized rubbers obtained therefrom.

Recently, a desire has arisen in specialist fields for a vulcanized rubber having a modulus of elasticity some 1.5 to 3 times higher than the 100% modulus of the general-purpose vulcanized rubbers now available. Such a high modulus rubber should be comparable in other respects with conventional rubbers, giving excellent processability and workability in the unvulcanized state and giving a vulcanizate with physical properties similar to the conventional products apart from the higher modulus.

Vulcanized rubbers with a high modulus of elasticity have usually been produced by increasing the amount of carbon black or sulphur which is to be compounded with the rubber, thereby increasing the crosslinking density. According to these methods, however, the processability and workability of the unvulcanized rubber composition and the physical properties of the vulcanized rubber are unsatisfactory.

USA 3431246 describes the preparation of copolymers from a conjugated diene and a glycidyl-containing monomer, optionally in the presence of a further monomer which may be styrene. The copolymers can then be vulcanized either using sulphur and conventional accelerators for rubber, or by cross-linking through the epoxy groups using hardeners. The US patent gives a long list of suitable hardening agents, including amines, anhydrides and fatty acid salts of the amines. More generally, it is well known that many different kinds of curing agents can be used as hardeners for epoxy resins: see, for instance, USA 3113036.

U.S. Patent No. 4,094,831 teaches that the green strength of an elastomeric copolymer composed of a $C_4$ or $C_5$ conjugated diene, styrene and a glycidyl-containing monomer can be improved by incorporating thereinto a crosslinking agent selected from the group consisting of monoamines, diamines, mono-acid anhydrides, poly-acid anhydrides, monocarboxylic acids and polycarboxylic acids. However, such a rubber composition still undergoes at the time of kneading the phenomenom known in the art as "scorching" and the modulus of elasticity of the vulcanized rubber obtained from the composition is not so high as to satisfy the specialist requirements.

The present inventors have conducted extensive research on rubber compositions which can give a vulcanized rubber having a high modulus of elasticity but do not undergo scorching at the time of processing. As a result, it has unexpectedly been found that a suitable vulcanizable rubber compound can be formulated using an elastomeric copolymer consisting of a glycidyl containing monomer, a conjugated diene and styrene, an amine salt of a carboxylic acid as crosslinking agent, and optionally sulphur.

According to the present invention there is provided a vulcanizable rubber compound which comprises:
(I) a rubber component comprising
(I*a*) an elastomeric copolymer composed of a $C_4$ or $C_5$ conjugated diene and styrene, and a glycidyl-containing monomer; and
(I*b*) a vulcanizable rubber;
(II) an amine salt of a carboxylic acid; and
(III) optionally sulphur;
characterized in that the rubber compound comprises:
(I) 100 parts by weight of a rubber component comprising
(I*a*) 40 to 100% by weight of an elastomeric copolymer composed of 50% by weight or more of $C_4$ or $C_5$ conjugated diene, styrene in an amount such that the amount in the elastomeric copolymer, (I*a*), of the conjugated diene plus the styrene is 80 to 99.5% by weight, and 0.5 to 20% by weight of glycidyl-containing monomer provided that the amount of glycidyl-containing monomer in the rubber component, (I) is 0.5% by weight or more; and
(I*b*) 60 to 0% by weight of vulcanizable rubber;
(II) 0.1 to 15 parts by weight of an amine salt of a carboxylic acid which carboxylic acid is a $C_2$—$C_{20}$ aliphatic dicarboxylic acid; glycolic, malic, lactic or citric acid; or a $C_7$—$C_{20}$ aromatic monocarboxylic acid substituted with a hydroxy group; and
(III) 0 to 7 parts by weight of sulphur.

A rubber compound formulated in this way is capable of giving a vulcanized rubber having a high modulus of elasticity, and yet typically does not undergo scorching during kneading and is excellent in processability.

The elastomeric component, (I*a*), used in the compounds of this invention is composed of $C_4$ or $C_5$ conjugated diene, styrene and glycidyl-containing monomer, wherein the conjugated diene content is 50% by weight or more, the total amount of the conjugated diene and the styrene is 80 to 99.5% by weight, and the glycidyl-containing monomer content is 0.5 to 20% by weight. Examples of the $C_4$ or $C_5$ conjugated diene include butadiene, isoprene, 1,3-pentadiene and mixtures thereof; of these examples butadiene or isoprene is preferred, with butadiene being particularly preferable. The glycidyl-containing monomer is a monomer having a glycidyl group and being copolymerizable with the styrene and the

2

## 0 005 617

conjugated diene. Specific examples of such a glycidyl-containing monomer include glycidyl methacrylate, glycidyl acrylate, glycidyl allyl ether and the like, among which glycidyl methacrylate is preferred.

From the viewpoint of processability the stryene content in copolymer (Ia) is preferably 5% by weight or more but 45% by weight or less. The amount of conjugated diene in the copolymer (Ia) has to be at least 50% by weight, because if it is less then the copolymer obtained does not have rubber properties suitable for use in compounds of this invention. That is, if the conjugated diene content is less than 50%, the vulcanized rubber obtained from a rubber compound of this invention does not retain a high modulus of elasticity at high temperatures and generates much heat when subjected to repeated deformation. If the content of said glycidyl-containing monomer in the rubber component (I) is less than 0.5% by weight, the vulcanized rubber obtained does not have high modulus of elasticity. If the amount of glycidyl-containing monomer in the copolymer (Ia) is more than 20% by weight, the elongation at break of the vlucanized rubber is decreased.

The elastomeric copolymer, component (Ia), is usually produced by emulsion polymerization, though it may also be produced by other polymerization processes.

The amine salt of a carboxylic acid, component (II), acts as crosslinking agent and reacts with the epoxy group of the glycidyl-containing monomer at a temperature equal to or higher than the vulcanization temperature. The amine can be a primary, secondary or tertiary amine and can be a mono- or higher, i.e. polyamine. Aliphatic and alicyclic mono- and di-amines having 1 to 20 carbon atoms are preferred. Suitable monoamines include primary amines such as ethylamine, butylamine and ethanolamine, secondary amines such as diethylamine, dibutylamine and piperidine and tertiary amines such as tributylamine. Polyamines having two more amino groups which are primary, secondary or tertiary amino groups can also be used. Suitable polyamines include primary diamines such as hexamethylenediamine p-phenylenediamine and the like, secondary diamines such as N,N'-dimethylethylenediamine, N,N'-dimethyl-p-phenylenediamine, piperazine and the like, and tertiary diamines such as triethylenediamine and the like. Furthermore, diethylenetriamine, triethylenetetramine, hexamethylenetetramine, ethyleneimine, polyethyleneimine and the like may also be used.

Of the amines, alicyclic amine compounds and aliphatic amine compounds are preferred. Specifically, diamines such as piperazine, hexamethylenediamine and the like and monoamines such as piperidine and the like are preferred; piperazine being particularly preferred.

The carboxylic acid forming a salt with the amine is a $C_2$—$C_{20}$ aliphatic dicarboxylic acid having 2 to 20 carbon atoms, such as oxalic, malonic, succinic, adipic or sebacic acid; or a hydroxy aliphatic acid which is glycolic, malic, lactic or citric acid; or a hydroxy $C_7$ to $C_{20}$ aromatic mono-carboxylic acid such as p-hydroxybenzoic ("p-oxybenzoic") acid. Among these acids, the hydroxy carboxylic acids are preferred, with glycolic, malic, lactic and p-hydroxybenzoic acid being particularly preferred. If desired, the amine salt (II) can be a nylon salt, i.e. a 1:1 salt formed between a diamine and a dicarbocylic acid. Particularly suitable nylon salts include 6,10-nylon salt and 6,6-nylon salt.

The vulcanizable rubber (Ib) may be, for example natural rubber, polyisoprene, polybutadiene, styrene-butadiene rubber, ethylenepropylene rubber, butyl rubber, chloroprene rubber, nitrile rubber, and the like, among which natural rubber, polyisoprene, polybutadiene and styrenebutadiene rubber are preferred.

The crosslinking agent (II) is added in an amount of 0.1 to 15 parts by weight and preferably 1 to 10 parts by weight per 100 parts by weight of rubber component (I). If the amount is less than 0.1 part by weight, a vulcanized rubber having a high modulus of elasticity cannot be obtained. If it is more than 15 parts by weight, the crosslinking agent causes blooming, which is undesirable. By using the specified crosslinking agent, namely a salt formed between the amine and the carboxylic acid, particularly a hydroxy or thiol carboxylic acid, in an amount within the specified range, there can be obtained a rubber compound capable of giving a vulcanized rubber having a high modulus of elasticity and markedly improved in anti-scorch property.

Although the glycidyl-containing elastomeric copolymer (Ia) may be used alone in rubber compounds according to this invention, it may also be used in combination with 60% by weight or less, preferably 50% by weight or less, of another vulcanizabler rubber (Ib). If the amount of the vulcanizable rubber (Ib) exceeds 60% by weight, the characteristic properties of the glycidyl-containing elastomeric copolymer cannot fully be exhibited, so that a rubber of high modulus is difficult to obtain. It is also necessary that the glycidyl-containing monomer is present in the rubber component (I) in an amount of 0.5% by weight or more.

On the other hand, it is also possible to blend a rubber compound according to this invention with a general purpose rubber in order to enhance the modulus of elasticity of the vulcanizate without injuring the characteristic properties of the rubber. In this case, the compound of this invention is blended in an amount of 10% or more but less than 40% of the mixture. The amount of glycidyl-containing monomer in the total rubber component has to be 0.5% by weight or more. Preferably, the proportions of the amine salt (II) of a carboxylic acid and the sulphur (III) to the total rubber component are 0.1 part by weight or more and 0.5 part by weight or more, respectively, per 100 parts by weight of the total rubber component. The general purpose rubber can be one of the same rubbers as the rubber (Ib).

In accordance with this invention, it is, of course, possible to effect crosslinkage with only an amine salt (II) of a carboxylic acid. It is particularly preferable, however, to use sulphur, component (III), in combination therewith from the viewpoint of obtaining a vulcanized rubber having a high modulus of elasticity. In this case, the sulphur is used in an amount of 7 parts or less and preferably 5 parts or less per 100 parts by weight of rubber component (I). When the glycidyl-containing elastomeric copolymer (I$a$) is blended with a vulcanizable rubber (I$n$), the use of sulphur is necessary. On this case, the amount of the sulphur is 0.5—7 parts by weight per 100 parts by weight of rubber component (I).

Conveniently, the addition of the crosslinking agent and any sulphur is effected with kneading by means of an open mill or a mixer.

With a rubber compound of this invention may be compounded those reinforcing materials, fillers, processing aids, antioxidants, and other additives which are conventionally compounded with rubbers. However, it is undesirable to add any additive, apart from the crosslinking agent, which is reactive with the glycidyl group and said additives throughout the whole production process including the polymerization step. Additives may be blended in by means of a roll or a Banbury mixer, or they may also be added in the course of producing the polymer.

The typical rubber compound of this invention has good processability and, at the same time, exhibits an anti-scorch effect. The processability is normally comparable to that of commercial blends of emulsion-polymerized SBR, and the composition is particularly easy to mix with carbon black.

A rubber compound of this invention can be vulcanized by heating it at a temperature of, for example, 60—200°C and preferably 100—170°C for 10 minutes to 5 hours. As to the mode of heating, either an open system or a press system may be selected, depending on the shape of the object to be heated. The resultant vulcanized rubber usually has a high modulus of elasticity. Moreover, the vulcanized rubber normally retains its high modulus of elasticity, only a small drop possibly occurring at high temperatures. The vulcanized rubber usually has a 50% modulus of 25 kg/cm² or more and a 100% modulus of 50 kg/cm² or more. Accordingly, the rubber compounds of this invention are useful where a high modulus of elasticity is required, such as for tires, rubber vibration insulators, bumpers, belts, flexible joints, guide rollers, ship's fenders or other side protectors, hoses, packing materials, sealing materials and the like products.

The present invention is illustrated in the following non-limiting Examples. Comparative Examples are also given. Unless otherwise specified, all parts and percentages are by weight. Reference is made in the following text to the accompanying drawings, in which:

Figure 1 shows a vulcanization curve which is presented for the purpose of explaining scorch time (t'$_c$(10)); and

Figures 2 and 3 show vulcanization curves for vulcanized rubbers prepared in certain of the present and Comparative Examples.

Production of Elastomeric Copolymers A to F.

The glycidyl methacrylate (abbreviated hereinafter to GMA)-butadiene-styrene copolymers A to F used in the Examples and Comparative Examples were synthesized in the following manner.

Using a conventional emulsion polymerization process, polymers A and B were produced from 72 parts of butadiene, 26 parts of styrene and 2 parts of GMA; polymers C, E and F in Table 1 from 72 parts of butadiene, 24 parts of styrene and 4 parts of GMA; and polymer D in Table 1 from 72 parts of butadiene, 22 parts of styrene and 6 parts of GMA. The polymerization temperature was 5°C and the conversion was about 60% in all the cases. The results of polymerization are shown in Table 1.

4

TABLE 1

| Polymer | $[\eta]$[1] (dl/g) | ML 100°C 1+4 | Content of GMA [2] (%) |
|---|---|---|---|
| A | 1.83 | 44.5 | 3.3 |
| B | 2.14 | 69 | 3.3 |
| C | 2.15 | 57 | 6.7 |
| D | 2.18 | 79 | 9.6 |
| E | 2.25 | 68 | 6.7 |
| F | 2.05 | 47.5 | 6.7 |

Notes: 1) Measured in toluene at 30°C.

2) Measured by infrared absorption spectroscopy.

The polymers synthesized by the procedure mentioned above were blended and kneaded as required according to the formulations in Table 2.

TABLE 2

Compounding Formulation

| Component | Formulation [I] | Formulation [II] |
|---|---|---|
| Polymer | 100 | 100 |
| Carbon black | 50 | 50 |
| Aromatic oil | 10 | 10 |
| Zinc oxide | 5 | 5 |
| Stearic acid | 3 | 3 |
| Accelerator (N-oxydiethylene-2-benzothiazole sulphenamide) | 1.5 | — |
| Sulphur | 2.5 | — |
| Crosslinking agent | Varying | Varying |

Then, on the one hand, the polymers were vulcanized and the vulcanizates subjected to tensile testing in accordance with JIS K 6301. On the other hand, the vulcanization curves were measured at 145°C by means of a curemeter (JSR CURELASTOMER, Registered Trade Mark, a curemeter manufactured by Japan Synthetic Rubber Co., Ltd.). In this way, the anti-scorch effect was evaluated. That is to say, when the torque at the start of the measurement is higher than that of the comparable

5

**0 005 617**

system free from the crosslinking agent and containing sulphur only, it is concluded · that the crosslinking reaction (namely scorching) has been caused before the start of vulcanization. In contrast, when the torque at the start of measurement is the same as that of the system free from the crosslinking agent and containing sulphur only, the time $(t_o)$ taken until the crosslinking reaction begins is measured, and also the time $(t'_c(10))$ taken until the torque reaches the value of $M_L + 0.1 (M_H - M_L)$, where $M_L$ is the minimum torque in the vulcanization curve and $M_H$ is the maximum torque in the same curve, is determined from the vulcanization curve. The larger the $t_o$ and $t'_c$ (10) values, the more excellent the anti-scorch effect. On the other hand, when the $t_o$ value is less than 0.5 min and the $t'_c$ (10) value is less than 1.0 min, the start of vulcanization is too early and therefore, the vulcanizing processability is inferior. Such a case is not desirable, and accordingly, in these circumstances, it is judged that the rubber compound has no anti-scorch effect.

The vulcanization conditions were 60 min at 145°C, except that in Examples 16 to 19 and Comparative Example 6, press vulcanization was carried out for 45 min at 145°C.

Examples 1 and 2 and Comparative Examples 1 and 2

The piperazine salt of malic acid was used as the crosslinking agent in Example 1, and the piperazine salt of citric acid was used as the crosslinking agent in Example 2. The results obtained are shown in Table 3. For comparison, the results obtained where no crosslinking agent was used (Comparative Example 1) and where piperazine itself was used as the crosslinking agent (Comparative Example 2) are also shown in Table 3. All the crosslinking agents were used in the same molar amount.

TABLE 3

| Example No. | Polymer | Crosslinking agent | | Formulation | $M_{100}$ [2] (kg/cm²) | $T_B$ [3] (kg/cm²) | $E_B$ [4] (%) | $t_o$ (min) | $t'_c$ (10) (min) |
|---|---|---|---|---|---|---|---|---|---|
| | | Nature (PHR) [1] | Amount | | | | | | |
| 1 | A | piperazinium malate | 2.56 | [ I ] | 56 | 212 | 268 | 3.3 | 6.8 |
| 2 | A | piperazinium citrate | 2.49 | [ I ] | 54 | 163 | 195 | 3.3 | 6.8 |
| Comparative Example 1 | A | None | | [ I ] | 32 | 216 | 373 | 6.3 | 16.0 |
| Comparative Example 2 | A | piperazine | 1 | [ I ] | 52 | 228 | 343 | — | — |

Notes: 1) PHR means parts per 100 parts by weight of rubber.

2) $M_{100}$ means 100% modulus.

3) $T_B$ means tensile strength at break.

4) $E_B$ means elongation at break.

0 005 617

**0 005 617**

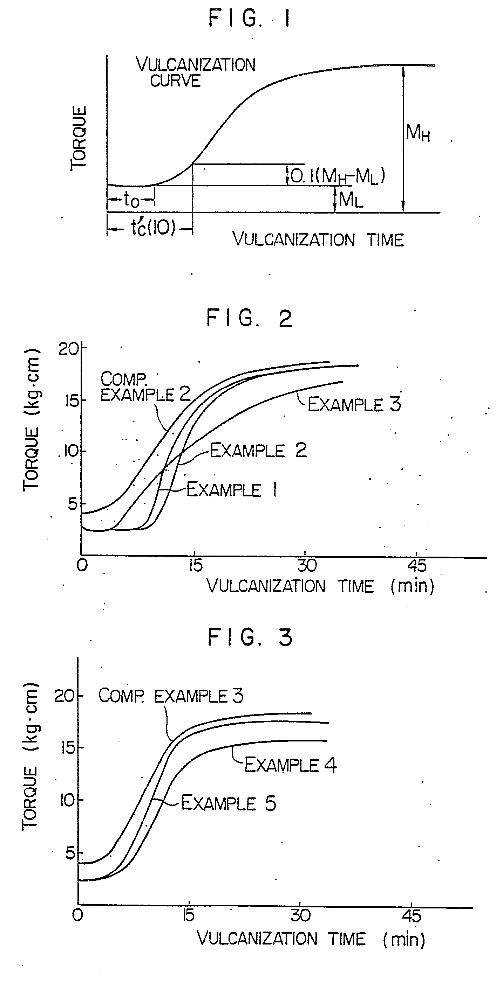

The vulcanization curves obtained in Examples 1 and 2 and Comparative Example 2 are shown in Figure 2.

It can be seen that the desired rubbers having a high modulus are obtained in Examples 1 and 2 and the rubbers thus obtained are excellent in anti-scorch effect. On the other hand, in Comparative Example 1, which shows vulcanization with sulphur only, the modulus of the vulcanizate obtained is low. In Comparative Example 2, it is seen from Figure 2 that scorching takes place before vulcanization, because the torque at the vulcanization time of zero is higher than in the other cases as observed on the vulcanization curve.

Example 3

The piperazine salt of hydroxybenzoic acid was used alone as the crosslinking agent. The results obtained are shown in Table 4.

The vulcanization curve obtained is shown in Figure 2.

TABLE 4

| Example No. | Polymer | Crosslinking agent | | Formulation | $M_{100}$ (kg/cm²) | $T_B$ (kg/cm²) | $E_B$ (%) | $t_o$ (min) | $t'_c$ [10] (min) |
|---|---|---|---|---|---|---|---|---|---|
| | | Nature | Amount (PHR) | | | | | | |
| 3 | C | piperazium p-hydroxy benzoate | 8.42 | [ II ] | 77 | 178 | 224 | 1.3 | 3.1 |

# O 005 617

### Examples 4 and 5 and Comparative Example 3

The piperazine salt of glycolic acid was used as the crosslinking agent and the amount thereof was varied. The amount of the crosslinking agent used in Example 5 was equimolar to that in Comparative Example 3, while that in Example 4 was one half thereof. The results obtained are shown in Table 5.

TABLE 5

| Example | Polymer | Crosslinking agent | | Formulation | $M_{100}$ | $T_B$ | $E_B$ | $t_o$ | $t'_c$ (10) |
| | | Nature | Amount (PHR) | | (kg/cm²) | (kg/cm²) | (%) | (min) | (min) |
|---|---|---|---|---|---|---|---|---|---|
| 4 | B | piperazinium glycolate | 2.27 | [ I ] | 56 | 169 | 221 | 1.8 | 5.3 |
| 5 | B | piperazinium glycolate | 5.53 | [ I ] | 83 | 171 | 173 | 2.0 | 3.5 |
| Comparative Example 3 | B | piperazine | 2 | [ I ] | 76 | 174 | 160 | — | — |

The vulcanization curves obtained in Examples 4 and 5 and Comparative Example 3 are shown in Figure 3. In Comparative Example 3, the torque at the start was great and scorching was observed.

Examples 6—9 and Comparative Examples 4—6

Piperazine salts of hydroxy monocarboxylic acid were used as the crosslinking agent for formulations [I] in which polymer E was used, and the results obtained are shown in Table 7.

TABLE 7

| Example No. | Crosslinking agent | | Compound Mooney viscosity 100°C $ML_{1+4}$ | Green strength $T_{max}$ (kg/cm²) |
|---|---|---|---|---|
| | Nature | Amount (PHR) | | |
| Comparative Example 4 | None (S only) | — | 59.5 | 4.0 |
| " 5 | piperazine | 1 | 142.0 | 26.1 |
| " 6 | glycolic acid | 1.77 | 63.0 | 4.2 |
| Example 6 | piperazinium glycolate | 2.77 | 68.0 | 5.1 |
| " 7 | piperazinium p-hydroxybenzoate | 4.21 | 65.0 | 5.5 |
| " 8 | piperazinium oxalate | 2.05 | 62.0 | 4.5 |
| " 9 | piperazinium malonate | 2.21 | 64.0 | 4.8 |

TABLE 7 (Continued)

| Properties of vulcanizate | | | | Measurement by curemeter | |
|---|---|---|---|---|---|
| $M_{50}$ (kg/cm²) | $M_{100}$ (kg/cm²) | $T_B$ (kg/cm²) | $E_B$ (%) | $t_o$ (min) | $t'_c$ (10) (min) |
| 19 | 37 | 203 | 351 | 7.3 | 21.1 |
| 57 | 122 | 204 | 169 | Scorch | |
| 20 | 40 | 173 | 231 | 11.4 | 29.3 |
| 35 | 77 | 194 | 218 | 1.5 | 6.7 |
| 36 | 83 | 168 | 187 | 1.9 | 6.9 |
| 25 | 51 | 152 | 231 | 2.5 | 15.8 |
| 33 | 72 | 197 | 226 | 0.8 | 6.3 |

0 005 617

It is seen that the intended high modulus rubber was obtained and that they were excellent in anti-scorch effect. On the other hand, in Comparative Example 4, where the rubber was vulcanized with sulphur alone, the vulcanizate did not have a high modulus. In Comparative Example 5, the compound Mooney viscosity was too high, and the processability deteriorated. Measurement of the vulcanization curve reveals that the torque at the start of measurement is higher than that of the system vulcanized with sulphur alone (Comparative Example 4). Comparative Example 6 demonstrates that the intended high modulus rubber cannot be obtained by compounding with only the hydroxy monocarboxylic acid itself.

Example 10—13 and Comparative Examples 7 and 8 Hexamethylenediamine salts of carboxylic acid were used as the crosslinking agent for formulations [I] in which polymer F was used. The results obtained are shown in Table 8.

TABLE 8

| Example No. | Crosslinking agent | | Compound Mooney viscosity $ML_{1+4}^{100°C}$ | Green strength $T_{max}$ (kg/cm²) |
|---|---|---|---|---|
| | Nature | Amount (PHR) | | |
| Comparative Example 7 | hexamethylenediamine | 1.35 | 154.0 | 36.2 |
| Example 8 | adipic acid | 1.70 | 67.5 | 4.5 |
| Example 10 | 6,6-nylon salt [1] | 3.05 | 65.0 | 4.8 |
| ,,  11 | 6,10-nylon salt [2] | 3.70 | — | 5.1 |
| ,,  12 | 6,4-nylon salt [3] | 2.72 | — | 5.0 |
| ,,  13 | hexamethylenediammonium glycolate | 4.62 | — | — |

1) hexamethylenediammonium adipate.

2) hexamethylenediammonium sebacate.

3) hexamethylenediammonium succinate.

TABLE 8 (Continued)

| Properties of vulcanizate | | | | Measurement by curemeter | |
|---|---|---|---|---|---|
| $M_{50}$ (kg/cm²) | $M_{100}$ (kg/cm²) | $T_B$ (kg/cm²) | $E_B$ (%) | $t_o$ (min) | $t'_c$ (10) (min) |
| 46 | 97 | 217 | 238 | Scorch | |
| 19 | 35 | 127 | 281 | 5.0 | 21.6 |
| 25 | 52 | 112 | 178 | 1.9 | 5.5 |
| 31 | 61 | 180 | 254 | 2.0 | 4.4 |
| 30 | 63 | 178 | 234 | 2.8 | 5.5 |
| 30 | 64 | 204 | 259 | 1.8 | 4.0 |

It is seen that both the glycolate and the nylon salts give the intended high modulus rubbers excellent in anti-scorch effect. On the other hand, the rubber obtained in Comparative Example 7 has a high compound Mooney viscosity and a low processability. Measurement of vulcanization curve reveals that the torque at the start of measurement is higher than that in the system vulcanized with sulphfur alon. Comparative Example 8 demonstrates that the intended high modulus rubber cannot be obtained by compounding with the carboxylic acid alone.

### Example 14

The piperidine salt of glycolic acid (the monoamine salt of the acid) was used as the crosslinking agent. The results obtained are shown in Table 9.

TABLE 9

| Example No. | Polymer | Crosslinking agent | | Formulation | $M_{100}$ $(kg/cm^2)$ | $T_B$ $(kg/cm^2)$ | $E_B$ (%) | $t_o$ (min) | $t'_c(10)$ (min) |
|---|---|---|---|---|---|---|---|---|---|
| | | Nature | Amount (PHR) | | | | | | |
| 14 | C | piperidinium glycolate | 4.0 | [ I ] | 51 | 194 | 286 | 1.5 | 4.1 |

0 005 617

It is seen from Table 9, Example 14, that the monoamine salt of a carboxylic acid similarly produced the intended high modulus rubber excellent in anti-scorch effect.

Examples 15 to 18 and Comparative Example 9

A GMA-containing SBR of this invention was blended with other rubbers. The formulations used are shown in Table 10 and the results obtained are shown in Table 11.

20

TABLE 10

Formulations

| | Example 15 | Example 16 | Example 17 | Example 18 | Comparative Example 9 |
|---|---|---|---|---|---|
| NR | 0 | 25 | 50 | 75 | 100 |
| Polymer D | 100 | 75 | 50 | 25 | 0 |
| Carbon black | 50 | 50 | 50 | 50 | 50 |
| Aromatic oil | 10 | 10 | 10 | 10 | 10 |
| Zinc oxide | 5 | 5 | 5 | 5 | 5 |
| Stearic acid | 3 | 3 | 3 | 3 | 3 |
| Dibenzothiazolyl disulphide | 1.5 | 1.3 | 1.1 | 0.9 | 0.7 |
| Tetramethylthiuram disulphide | 0.2 | 0.15 | 0.1 | 0.05 | 0 |
| Sulphur | 2.5 | 2.5 | 2.5 | 2.5 | 2.5 |
| Piperazine glycolate | 2.77 | 2.07 | 1.39 | 0.69 | 0 |

0 005 617

21

TABLE 11

| Example No. | $M_{100}$ (kd / cm²) | $T_B$ (kg / cm²) | $E_B$ (%) | $t_o$ (min) | $t'_c$ (10) (min) |
|---|---|---|---|---|---|
| 15 | 96 | 174 | 159 | 1.0 | 3.0 |
| 16 | 79 | 151 | 167 | 1.3 | 2.8 |
| 17 | 57 | 148 | 211 | 1.5 | 2.9 |
| 18 | 38 | 156 | 299 | 1.8 | 2.8 |
| Comparative Example 9 | 19 | 145 | 411 | 2.0 | 2.8 |

**Claims**

1. A vulcanizable rubber compound which comprises:

(I) a rubber component comprising

(Ia) an elastomeric copolymer composed of a $C_4$ or $C_5$ conjugated diene and styrene, and a glycidyl-containing monomer; and

(Ib) a vulcanizable rubber;

(II) an amine salt of a carboxylic acid; and

(III) optionally sulphur;

characterized in that the rubber compound comprises:

(I) 100 parts by weight of a rubber component comprising

(Ia) 40 yo 100% by weight of an elastomeric copolymer composed of 50% by weight or more of $C_4$ or $C_5$ conjugated diene, styrene in an amount such that the amount in the elastomeric copolymer, (Ia), of the conjugated diene plus the styrene is 80 to 99.5% by weight, and 0.5 to 20% by weight of glycidyl-containing monomer provided that the amount of glycidyl-containing monomer in the rubber component, (I), is 0.5% by weight or more; and

(Ib) 60 to 0% by weight of vulcanizable rubber;

(II) 0.1 to 15 parts by weight of an amine salt of a carboxylic acid which carboxylic acid is a $C_2$—$C_{20}$ aliphatic dicarboxylic acid; glycolic, malic, lactic or citric acid; or a $C_7$—$C_{20}$ aromatic monocarboxylic acid substituted with a hydroxy group; and

(III) 0 to 7 parts by weight of sulphur.

2. A rubber compound according to claim 1, wherein the amine of the amine salt is a $C_1$—$C_{20}$ aliphatic or alicyclic mono- or higher amine.

3. A rubber compound according to claim 1, wherein the carboxylic acid of the amine salt of a carboxylic acid (II), is oxalic, malonic, succinic, adipic, sebacic, glycolic, malic, lactic, citric or p-hydroxybenzoic acid.

4. A rubber compound according to claim 3, wherein the carboxylic acid is glycolic, malic, lactic or p-hydroxybenzoic acid.

5. A rubber compound according to claim 1, 2 or 3, wherein the carboxylic acid of the amine salt of a carboxylic acid, (II), is a hydroxy carboxylic acid.

6. A rubber compound according to any preceding claim, wherein the amine of the amine salt of the carboxylic acid, (II), is ethylamine, butylamine, ethanolamine, diethylamine, dibutylamine, piperidine, ethyleneimine, tributylamine, hexamethylenediamine, p-phenylenediamine, N,N'-dimethylethylenediamine, N,N'-dimethyl-p-phenylenediamine, piperazine, triethylenediamine, diethylenetriamine, triethylenetetramine, hexamethylenetetramine or polyethyleneimine.

7. A rubber compound according to claim 6, wherein the amine is piperazine, hexamethylenediamine or piperidine.

8. A rubber compound according to claim 7, wherein the amine is piperazine.

9. A rubber compound according to claim 7, wherein the amine is piperidine.

10. A rubber compound according to any of claims 1 to 7, wherein the amine of the amine salt of a carboxylic acid, (II), is a monoamine or a diamine.

11. A rubber compound according to claim 1, wherein the amine salt of a carboxylic acid, (II), is a nylon salt.

12. A rubber compound according to claim 11 wherein the nylon salt is 6,10-nylon salt or 6,6-nylon salt.

13. A rubber compound according to any preceding claim, wherein the amount of the amine salt of a carboxylic acid, (II), is 1 to 10 parts by weight per 100 parts by weight of rubber component (I).

14. A rubber compound according to any preceding claim, wherein the sulphur content, (III), is 0.5 to 7 parts by weight based on 100 parts by weight of the rubber component (I).

15. A rubber compound according to any preceding claim, wherein the rubber, (Ib), is natural rubber, polyisoprene, polybutadiene, or styrene-butadiene rubber.

16. A rubber compound acocrding to any of claims 1 to 14, wherein the amount of rubber, (Ib), is 0%.

17. A mixture consisting of a rubber compound of any preceding claim and at least 10% but less than 40% of a general purpose rubber, the content of glycidyl-containing monomer in the total rubber component being 0.5% by weight or more; the proportion of the amine salt of a carboxylic acid, (II), being 0.1 part by weight or more per 100 parts by weight of the total rubber component; and the proportion of sulphur, (III), being 0.5 part by weight or more per 100 parts by weight of the total rubber component.

18. An article of vulcanized rubber made from a rubber compound as claimed in any of claims 1 to 16 or from a mixture as claimed in claim 17.

**0 005 617**

**Patentansprüche**

1. Ein vulkanisierbares Kautschukgemisch, enthaltend:
(I) ein Kautschukkomponente, umfassend
(Ia) ein elastomeres Copolymeres, bestehend aus einem konjugierten $C_4$- oder $C_5$-Dien und Styrol, und ein Glycidyl-enthaltendes Monomeres, und
(Ib) einen vulkanisierbaren Kautschuk,
(II) ein Aminsalz einer Carbonsäure, und
(III) gegebenenfalls Schwefel, dadurchgekennzeichnet, daß das Kautschukgemisch enthält:
(I) 100 Gewichsteile einer Kautschukkomponente, umfassend
(Ia) 40 bis 100 Gewichtsprozent eines elastomeren Copolymeren, bestehend aus 50 Gewichtsprozent oder mehr eines konjugierten $C_4$- oder $C_5$-Diens und Styrol in einer solchen Menge, daß das konjugierte Dein und das Styrol im elastomeren Copolymeren (Ia) 80 bis 99,5 Gewichtsprozent ausmachen, und 0,5 bis 20 Gewichtsprozent eines Glycidyl-enthaltenden Monomeren, vorausgesetzt die Menge des Glycidyl-enthaltenden Monomeren in der Kautschukkomponente (I) beträgt 0,5 Gewichtsprozent oder mehr, und
(Ib) 60 bis 9 Gewichtsprozent eines vulkanisierbaren Kautschuks,
(II) 0,1 bis 15 Gewichtsteile eines Aminsalzes einer Carbonsäure, wobei die Carbonsäure eine aliphatishce $C_2$—$C_{20}$-Dicarbonsäure, Glycol-, Malin-, Milch- oder Citronensäure oder ein aromatische $C_7$—$C_2$-Monocarbonsäure ist, die mit einer Hydroxylgruppe substituiert ist, und
(III) 0 bis 7 Gewichtsteile Schwefel.

2. Ein Kautschukgemisch nach Anspruch 1, in dem das Amin des Aminsalzes ein aliphatisches oder alicyclisches $C_1$—$C_{20}$-Monoamin oder höheres Amin ist.

3. Ein Kautschukgemisch nach Anspruch 1, in dem die Carbonsäure des Aminsalzes einer Carbonsäure (II) Oxal-, Malon-, Bernstein-, Adipin-, Sebacin-, Glycol-, Malin-, Milch-, Citronen- oder p-Hydroxybenzoesäure ist.

4. Ein Kautschukgemisch nach Anspruch 3, in dem die Carbonsäure Glycol-, Malin-, Milch-, oder p-Hydroxybenzoesäure ist.

5. Ein Kautschukgemisch nach Anspruch 1, 2 oder 3, in dem die Carbonsäure des Aminsalzes einer Carbonsäure (II) eine Hydroxycarbonsäure ist.

6. Ein Kautschukgemisch nach einem der vorstehenden Ansprüche, in dem das Amin des Aminsalzes der Carbonsäure (II) Ethylamin, Butylamin, Ethanolamin, Diethylamin, Dibutylamin, Piperidin, Ethylenimin, Tributylamin, Hexamethylendiamin, p-Phenylendiamin, N,N'-Dimethyl-ethylendiamin, N,N'-Dimethyl-p-phenylendiamin, Piperazin, Trietylendiamin, Diethylentriamin, Triethylentetramin, Hexamethylentetramin oder Polyethylenimin ist.

7. Ein Kautschukgemisch nach Anspruch 6, in dem das Amin Piperazin, Hexamethylendiamin oder Piperidin ist.

8. Ein Kautschukgemisch nach Anspruch 7, in dem das Amin Piperazin ist.

9. Ein Kautschukgemisch nach Anspruch 7, in dem das Amin Piperidin ist.

10. Ein Kautschukgemisch nach einem der Ansprüche 1 bis 7, in dem das Amin des Aminsalzes einer Carbonsäure (II) ein Monoamin oder ein Diamin ist.

11. Ein Kautschukgemisch nach Anspruch 1, in dem das Aminsalz einer Carbonsäure (II) ein Nylonsalz ist.

12. Ein Kautschukgemisch nach Anspruch 11, in dem das Nylonsalz das 6,10-Nylonsalz oder das 6,6-Nylonsalz ist.

13. Ein Kautschukgemisch nach einem der vorhergehenden Ansprüche, in dem die Menge des Aminsalzes einer Carbonsäure (II) 1 bis 10 Gewichtsteile je 100 Gewichtsteile Kautschukkomponente (I) beträgt.

14. Ein Kautschukgemisch nach einem der vorstehenden Ansprüche, in dem der Schwefelgehalt (III) 0,5 bis 7 Gewichtsteile beträgt, bezogen auf 100 Gewichtsteile der Kautschukkomponente (I).

15. Ein Kautschukgemisch nach einem der vorstehenden Ansprüche, in dem der Kautschuk (Ib) ein natürlicher Kautschuk, Polyisopren, Polybutadien oder ein Styrol-Butadien-Kautschuk ist.

16. Ein Kautschukgemisch nach einem der Ansprüche 1 bis 14, in dem die Menge an Kautschuk (Ib) 0% ist.

17. Ein Gemisch, bestehend aus einer Kautschukkomponente gemäß einem der vorstehenden Ansprüche und mindestens 10%, jedoch weniger als 40%, eines allgemein verwendbaren Kautschuks, wobei der Gehalt an Glycidyl-enthaltendem Monomeren in der Gesamtkautschukkomponente 0,5 Gewichtsprozent oder mehr beträgt, der Anteil des Aminsalzes einer Carbonsäure (II) 0,1 Gewichtsteile oder mehr je 100 Gewichtsteile der Gesamtkautschukkomponente beträgt und der Anteil des Schwefels (III) 0,5 Gewichtsteile oder mehr je 100 Gewichtsteile der Gesamtkautschukkomponente ist.

18. Ein Artikel aus vulkanisierbarem Kautschuk, hergestellt aus einem Kautschukgemisch gemäß einem der Ansprüche 1 bis 16 oder aus einem Gemisch gemäß Anspruch 17.

24

# 0 005 617

**Revendications**

1. Produit caoutchouteux vulcanisable, comprenant:
(I) un composant caoutchouteux formé de:
(Ia) un copolymère élastomère composé d'un diène conjugué en $C_4$ ou $C_6$, de styrène et d'un monomère contenant un glycidyle; et
(Ib) un caoutchouc vulcanisable;
(II) un sel aminé d'un acide carboxylique; et
(III) facultativement du soufre,
caractérisé en ce que le produit caoutchouteux comprend:
(I) 100 parties en poids d'un composant caoutchouteux formé de:
(Ia) 40 à 100% en poids d'un copolymère élastomère composé de 50% en poids ou plus d'un diène conjugué en $C_4$ ou $C_6$, du styrène dans une proportion telle que, dans le copolymère élastomère (Ia), la quantité totale du diène conjugué et du styrène soit comprise entre 80 et 99,5% en poids, et 0,5 à 20% en poids de monomère contenant un glycidyle, avec cette condition que la quantité de monomère contenant un glycidyle dans le composant caoutchouteux (I) soit de 0,5% en poids ou plus; et
(Ib) 60 à 0% en poids de caoutchouc vulcanisable;
(II) 0,1 à 15 parties en poids d'un sel aminé d'un acide carboxylic, cet acide carboxylique étant un acide dicarboxylique aliphatique en $C_2$ à $C_{20}$, l'acide glycolique, malique, lactique ou citrique, ou un acide monocarboxylique aromatique en $C_7$ à $C_{20}$ substitué par un groupe hydroxy; et
(III) 0 à 7 parties en poids de soufre.

2. Produit caoutchouteux selon la revendication 1, caractérisé en ce que l'amine du sel aminé est une monoamine ou une amine supérieure aliphatique ou alicyclique en $C_1$ à $C_{20}$.

3. Produit caoutchouteux selon la revendication 1, caractérisé en ce que l'acide carboxylique du sel aminé d'un acide carboxylique (II) est l'acide oxalique, malonique, succinique, adipique, sébacique, glycolique, malique, lactique, citrique ou p-hydroxybenzoïque.

4. Produit caoutchouteux selon la revendication 3, caractérisé en ce que l'acide carboxylique est l'acide glycolique, malique, lactique ou p-hydroxybenzoïque.

5. Produit caoutchouteux selon l'une quelconque des revendications 1 à 3, caractérisé en ce que l'acide carboxylique du sel aminé d'un acide carboxylique (II) est un acide hydroxycarboxylique.

6. Produit caoutchouteux selon l'une quelconque des revendications 1 à 5, caractérisé en ce que l'amine du sel aminé de l'acide carboxylique (II) est l'éthylamine, la butylamine, l'éthanolamine, la diéthylamine, la dibutylamine, la pipéridine, l'éthylène-imine, la tributylamine, l'hexaméthylène-diamine, la p-phénylène-diamine, la N,N'-diméthyl-éthylène-diamine, la N,N'-diméthyl-p-phénylène-diamine, la pipérazine, la triéthylène-diamine, la diéthylène-triamine, la triéthylène-tétramine, l'hexaméthylène-tétramine ou une polyéthylène-imine.

7. Produit caoutchouteux selon la revendication 6, caractérisé en ce que l'amine est la pipérazine, l'hexaméthylène-diamine ou la pipéridine.

8. Produit caoutchouteux selon la revendication 7, caractérisé en ce que l'amine est la pipérazine.

9. composé caoutchouteux selon la revendication 7, caractérisé en ce que l'amine est la pipérazine.

10. Produit caoutchouteux selon l'une quelconque des revendications 1 à 7, caractérisé en ce que l'amine du sel aminé d'un acide carboxylique (II) est une monoamine ou une diamine.

11. Produit caoutchouteux selon la revendication 1, caractérisé en ce que le sel aminé d'un acide carboxylique (II) est un sel de nylon.

12. Produit caoutchouteux selon la revendication 11, caractérisé en ce que le sel de nylon est un sel de nylon-6,10 ou un sel de nylon-6,6.

13. Produit caoutchouteux selon l'une quelconque des revendications 1 à 12, caractérisé en ce que la proportion du sel aminé d'un acide carboxylique (II) est de 1 à 10 parties en poids pour 100 parties en poids de composant caoutchouteux (I).

14. Produit caoutchouteux selon l'une quelconque des revendications 1 à 13, caractérisé en que la teneur en soufre (III) est de 0,5 à 7 parties en poids, sur la base de 100 parties en poids du composant caoutchouteux (I).

15. Produit caoutchouteux selon l'une quelconque des revendications 1 à 14, caractérisé en ce que le caoutchouc (Ib) est un caoutchouc naturel, un polyisoprène, un polybutadiène ou un caoutchouc de styrène-butadiène.

16. Produit caoutchouteux selon l'une quelconque des revendications 1 à 14, caractérisé en ce que la proportion de caoutchouc (Ib) est de 0%.

17. Mélange composé d'un produit caoutchouteux selon l'une quelconque des revendications 1 à 16 et d'au moins 10%, mais pas plus de 40% d'un caoutchouc universel, la teneur en monomère contenant un glycidyle dans le composant caoutchouteux total étant de 0,5% en poids ou plus, la proportion du sel aminé d'une acide carboxylique (II) étant de 0,1 parties en poids ou plus pour 100 parties en poids du composant caoutchouteux total, et la proportion de soufre (III) étant de 0,5 parties en poids ou plus pour 100 parties en poids du composant caoutchouteux total.

18. Article de caoutchouc vulcanisé, fabriqué à partir d'un produit caoutchouteux selon l'une quelconque des revendications 1 à 16 ou à partir d'un mélange selon la revendication 17.

# FIG. 1

VULCANIZATION CURVE

TORQUE

$M_H$

$0.1(M_H - M_L)$

$M_L$

$t_0$

$t'_c(10)$

VULCANIZATION TIME

# FIG. 2

TORQUE (kg·cm)

COMP. EXAMPLE 2

EXAMPLE 3

EXAMPLE 2

EXAMPLE 1

VULCANIZATION TIME (min)

# FIG. 3

TORQUE (kg·cm)

COMP. EXAMPLE 3

EXAMPLE 4

EXAMPLE 5

VULCANIZATION TIME (min)

1